# EUROPEAN PATENT SPECIFICATION

(11) **EP 2 746 880 B1**
(45) Date of publication and mention of the grant of the patent: **25.04.2018**
(21) Application number: 12008507.1
(22) Date of filing: 21.12.2012
(51) Int. Cl.: G05B 19/042, B65G 54/02

(54) **Carriers synchronization in a conveying system of a machine**
Ladungsträgersynchronisierung eines Fördersystems einer Maschine
Synchronisation de porteurs de charge dans un système de transport d'une machine

(43) Date of publication of application: 25.06.2014
(73) Proprietor: ROBERT BOSCH GMBH, 70442 Stuttgart (DE)
(72) Inventor: Haring, Menno, 5615 RE Eindhoven (NL)
(74) Representative: Thürer, Andreas

(56) References cited:
- EP-A1- 0 141 334
- US-A1- 2004 049 308
- US-B1- 6 191 507

## Description

The present invention relates to a driving device control device, a conveying system control device and a control method for controlling a conveying system of a machine, in particular for moving some carriers of the conveying system together while other carriers are moved individually on one conveying track.

In machines for producing an article, conveying systems are used to convey parts, tools, etc., which are usable for the production of the article, to different stations of the machine. Such machines are described, for example, in US 2004/0049308 A1 which discloses an assembly for processing substrates, in which a conveying system for moving the substrates from a vacuum lock to a process chamber is provided.

US 4,792,036 A relates to a transporting device of the conveyor belt type. The transporting device does not relate to drive carriers in synchronization with each other.

US 6,191,507 B1 describes a modular conveyor system in which each moving element travels separately and independently so that it is not shown to drive the moving elements or carriers in synchronization with each other.

In such machines for producing an article, carriers are conveyable by the use of magnetic force. The magnetic force can be produced by driving devices fixedly arranged in one or more tracks along which the carriers travel.

Therewith, it is possible to convey each carrier with a velocity specific to the single carrier. However, sometimes it is preferable to convey at least some of the carriers together. Herein, it is to be secured, that the carriers do not collide with each other. Further, it is advantageous, to move carriers close to each other, which are to be moved together. Therewith, the space for carriers moving individually can be maximized.

As a solution for dealing with such problems, it is considered to start all of the carriers on a track of the conveying system at once. However, such a solution does not provide a flexible control and is often not desired, since the carriers have to wait for each other so that they can be moved simultaneously. In case the carriers have to wait for each other, the production speed of the machine is reduced.

As another solution, it is considered to perform a control such that the carriers do not start exactly at the same time. However, such a solution increases the danger of collisions of the carriers. It is also possible, that conflicts in controlling carriers close to each other arise.

There is another problem in that the control device of the conveying system can only give commands sequentially. It could be considered to solve this problem by adding new hardware, like wiring, etc. However, such a solution raises the costs of the conveying system and is thus undesired.

Therefore, it is an object of the present invention to provide a driving device control device, a conveying system control device and a control method for controlling carriers in a machine, with which device and method the above-mentioned problems can be solved. In particular, a control device and a control method for controlling carriers in a machine are to be provided with which more flexibility in conveying the carriers in a conveying system of the machine is created without increasing the danger of collision of carriers in the machine and/or the duration of the production process performed in the machine.

This object is solved by a driving device control device for controlling a driving device to drive carriers in a machine according to claim 1.

This object is further solved by a conveying system control device for controlling a conveying system of a machine according to claim 2. The conveying system control device comprises a determining unit for determining at least two driving devices of the conveying system, which driving devices have to convey carriers in synchronization with each other in the conveying system in which the carriers are conveyable with magnetic force and with variable velocity for each carrier, and a motion profile creating unit for creating a motion profile being a profile according to which a driving device has to drive a carrier, a transmitting unit for transmitting to the at least two driving devices determined by the determining unit the motion profile and thereafter a synchronization signal.

With the control devices, a greater flexibility can be created in choosing the velocity of carriers to be conveyed in a conveying system of the machine. Therewith, the production speed of the machine can be increased, because the carriers do not have to wait for each other longer than necessary. Other carriers, which need to be conveyed individually due to another process performed in the machine, are independent from carriers, which can be moved together.

The described arrangement of the control devices and the use of the synchronization signal avoid additional hardware which were the result in case a digital input, like a trigger, is used. Since such additional hardware is expensive and complex, and thus error prone, avoiding the hardware is very advantageous.

Therewith, the above-described control devices provide a cheap, flexible and fast control of the carriers in a conveying system of the machine, so that the duration of the production process is optimized and thus very effective.

Further advantageous developments of the control devices are set out in the dependent claims.

In the above-described driving device control device the starting unit can be configured to start driving of the carrier with the driving unit without waiting for the synchronization signal, in case the analyzing unit analyzed that the motion profile includes a start command, and/or to start driving of the carrier with the driving unit after the synchronization signal is received by the receiving unit, in case the analyzing unit analyzed that the motion profile does not include a start command.

It is possible that the motion profile creating unit is configured to create the motion profile such that the motion profile comprises a start command in case the driving device was not determined by the determining unit, and such that the motion profile comprises no start command in case the driving device was determined by the determining unit.

The conveying system control device can be arranged to allow other driving devices of the conveying system to convey a carrier unsynchronized with the synchronization signal, the other driving devices being not determined by the determining unit to receive the synchronization signal.

The conveying system control device can also comprise a carrier distance adjusting unit for adjusting a distance arranged between two carriers to be conveyed in synchronization with each other. Herein, the carrier distance adjusting unit is arranged to adjust the distance to a constant distance while the carriers are conveyed in synchronization with each other. Herein, there is the possibility to provide the carriers with at least two magnetic elements arranged spaced to each other with a predetermined magnet pole pitch, and wherein the constant distance is equal to n-times the magnet-pole pitch with n being an integer greater than or equal to zero.

The above-described control devices can be part of a conveying system for conveying carriers in a machine, which further comprises at least two carriers, and at least two driving devices for conveying the carriers with magnetic force and with a velocity variably determinable for each carrier from a first position to a second position different from the first position. Herein each driving device control device can control one of the driving devices.

The above-mentioned object is further solved by a control method for controlling a conveying system of a machine according to claim 10.

Further advantageous developments of the control method are set out in the dependent claims.

The control method can further comprise the steps of receiving, with a receiving unit of a driving device control device, a motion profile according to which the driving device has to drive a carrier or the synchronization signal, analyzing, with an analyzing unit, whether or not the motion profile includes a start command, driving, with a driving unit, the carrier with magnetic force according to the received motion profile, and starting, with a starting unit, driving of the carrier by the driving unit on the basis of an analyzing result of the analyzing unit and/or a receipt of the synchronization signal.

The steps of determining, creating and transmitting can be performed in the above-described conveying system control device for controlling the conveying system.

The steps of analyzing, driving and starting can be performed in the above-described driving device control device for controlling a driving device for driving carriers in the conveying system.

The control method achieves the same advantages as mentioned above for the control device.

Further possible implementations of the invention also comprise combinations of specific features described above or in the following as regards the embodiment, even if they are not explicitly mentioned. Therefore, the person skilled in the art will also add single aspects as improvements or supplements to the basic form of the invention.

In the following, the present invention is described in more detail with the help of an embodiment by reference to the appended drawings. The figures show:
Fig. 1 a side view of a machine comprising the conveying system with a control device according to an embodiment;
Fig. 2 a schematic block diagram of a control device according to the embodiment; and
Fig. 3 a flow chart schematically illustrating a control method according to the embodiment.

In the figures, similar elements or elements having similar functions are marked with the same reference signs unless specified otherwise.

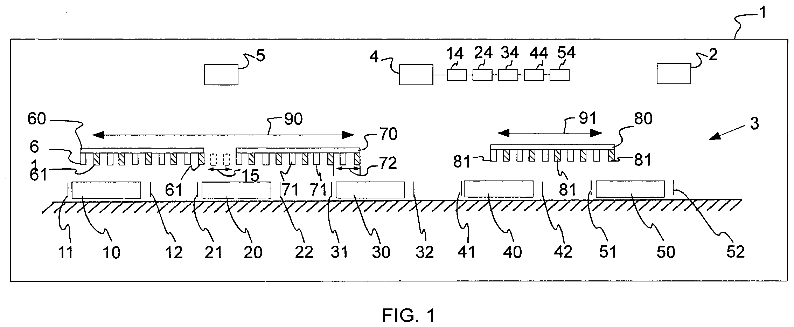

Fig. 1 shows a machine 1 for producing an article 2. The article can be an electronic apparatus, for example. The machine 1 comprises a conveying system 3 having a conveying system control device 4, a detection device 5, a first driving device 10, a second driving device 20, a third driving device 30, a fourth driving device 40, a fifth driving device 50, a first carrier 60, a second carrier 70, and a third carrier 80. The first and second carriers 60, 70 are conveyed together in the conveying system 3, as shown by the arrow 90 in Fig. 1. In contrast thereto, the third carrier 80 is moved alone or individually, as shown by an arrow 91 in Fig. 1.

In Fig. 1, the first to fifth driving devices 10, 20, 30, 40, 50 build up a track of the conveying system 3. The first carrier 60 and the second carrier 70 are arranged with a distance 15 between them. The distance 15 can be detected by the detecting device 5. A movement of the carriers 60, 70, 80 over the first to fifth driving devices 10, 20, 30, 40, 50 and the position of the carriers 60, 70, 80 can be detected by magnetic sensors 11, 12, 21, 22, 31, 32, 41, 42, 51, 52. The magnetic sensors 11, 12 are arranged at the both sides of the first driving device 10. The magnetic sensors 21, 22 are arranged at both sides of the second driving device 20. The magnetic sensors 31, 32 are arranged at both sides of the third driving device 30. The magnetic sensors 41, 42 are arranged at both sides of the fourth driving device 40. The magnetic sensors 51, 52 are arranged at the both sides of the fifth driving device 50.

The carriers 60, 70, 80 are movable in the conveying system 3 of Fig. 1 by a control performed by the conveying system control device 4 and first to fifth driving device control devices 14 to 54 of the conveying system 3. Herein, the first driving device 10 is controlled by the first driving device control device 14. The second driving device 20 is controlled by the second driving device control device 24. The third driving device 30 is controlled by the third driving device control device 34. The fourth driving device 40 is controlled by the fourth driving device control device 44. And, the fifth driving device 50 is controlled by the fifth driving device control device 54.

As illustrated in Fig. 1, the first carrier 60 comprises a plurality of magnetic elements 61 being arranged spaced to each other at a base plate. Similarly, the second carrier 70 comprises a plurality of magnetic elements 71, being arranged spaced to each other at a base plate of the second carrier 70. And, the third carrier 80 comprises a plurality of magnetic elements 81 being arranged spaced to each other at a base plate of the third carrier 80. For the sake of clear depiction, not all of the magnetic elements 61, 71, 81 are provided with a reference sign in Fig. 1. The magnetic elements 61, 71, 81 are spaced to each other at the first, second or third carrier 60, 70, 80 so that a magnet pole pitch 72 is present, as depicted in Fig. 1 at the second carrier 70.

The magnetic elements 61, 71, 81 cooperate with the first to fifth driving devices 10, 20, 30, 40, 50, so that the carriers 60, 70, 80 are moveable over the first to fifth driving devices 10, 20, 30, 40, 50 by magnetic force and the control performed by the control devices 4, 14, 24, 34, 44, 54. For this purpose, the magnetic elements 61, 71, 81 of the first to third carriers 60, 70, 80 are faced to the first to fifth driving devices 10, 20, 30, 40, 50 so that the magnetic elements 61, 71, 81 can cooperate with the first to fifth driving devices 10, 20, 30, 40, 50 to convey the carriers 60, 70, 80. Thus, the carriers 60, 70, 80 are moveable over the track of the conveying system 3 from a first position to a second position different from the first position. For example, the first position is the position on the left side of the conveying system 3 in Fig. 1, where the first driving device 10 is arranged in Fig. 1. The second position could then be the position of the fourth or fifth driving device 40, 50, which are arranged on the right side in Fig. 1.

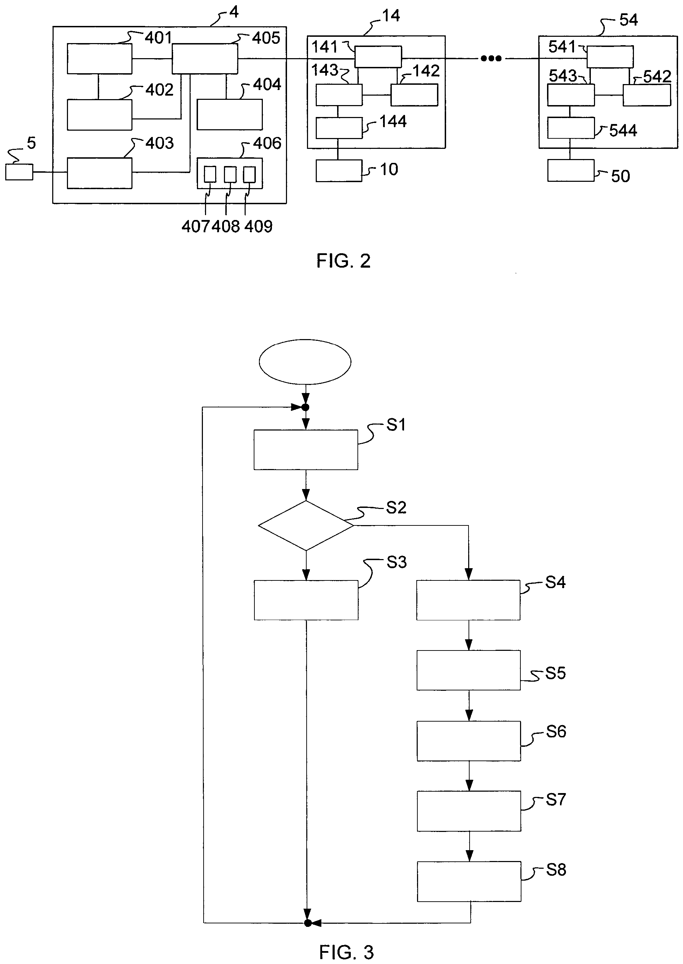

Fig. 2 shows the construction of the control system of the machine 1 in a schematic block diagram. The conveying system control device 4 of the conveying system 3 (Fig. 1) comprises a determining unit 401, a synchronization unit 402, a carrier distance adjusting unit 403, a motion profile creating unit 404, a transmitting unit 405, and a storing unit 406. The carrier distance adjusting unit 403 receives a detection signal of the detecting device 5, which signal indicates the detected distance 15 between the first carrier 60 and the second carrier 70 in Fig. 1. The detection signal of the detecting device 5 can also be stored in the storing unit 406, even if it is not shown in Fig. 2. The transmitting unit 405 can transmit signals to the first to fifth driving device control units 14 to 54 provided for the first to fifth driving devices 10, 20, 30, 40, 50.

As further shown in Fig. 2, the first driving device control device 14 comprises a receiving unit 141, an analyzing unit 142, a driving unit 144 and a starting unit 143. Similarly, the fifth driving device control device 54 comprises a receiving unit 541, an analyzing unit 542, a driving unit 544 and a starting unit 544. The second, third, and fourth driving device control devices 24, 34, 44 are constructed likewise, even if it is not shown in Fig. 2 in detail. The conveying system control device 4 and the first to fifth control device driving devices 14 to 54 are connected via a wiring 7 with which signals between the control devices 4 and 14 to 54 can be transmitted. The wiring 7 can be or include a bus system, for example.

The determining unit 401 in Fig. 2 serves for determining at least two driving devices of the driving devices 10, 20, 30, 40, 50 which should convey carriers of the first to third carriers 60, 70, 80 together. In particular, the determining unit 401 determines at least two driving devices 10, 20, 30, 40, 50 which have to convey carriers 60, 70, 80 in synchronization with each other. In the example of Fig. 1, the determining unit 401 would determine the first and second carriers 60, 70.

The synchronization unit 402 produces for this purpose a synchronization signal 407 which is to be sent to both driving devices which have to convey carriers in synchronization with each other. In the example of Fig. 1, the first driving device 10, the second driving device 20 and the third driving device 30 have to move the first and second carriers 60, 70 together and thus in synchronization with each other. Therefore, the determining unit 401 will determine that the synchronization signal 407 of the synchronization unit 402 is sent by the transmitting unit 405 to the first driving device control device 14, the second driving device control device 24 and the third driving device control device 34. However, the transmitting device 405 will not send a synchronization signal 407 to the fourth driving device control unit 44 and the fifth driving device control unit 54. The synchronization signal 407 can also be stored in the storing unit 406, as shown in Fig. 2.

The carrier distance adjusting unit 403 is for adjusting the distance 15 arranged between the two carriers 60, 70 which are to be conveyed in synchronization with each other in the example of Fig. 1. Advantageously, the distance 15 between the first and second carrier 60, 70 is adjusted by the carrier distance adjusting unit 403 to a constant distance. In particular, this constant distance is equal to at least the magnet pole pitch 72 indicated in Fig. 1. It is possible, that the constant distance is equal to n-times the magnet pole pitch 72, wherein n is an integer multiple or a whole-number-multiple of the magnet pole pitch 72 greater than or equal to zero. In case n is equal to zero, the first and second carriers 60, 70 abut on each other.

The motion profile creating unit 404 of Fig. 1 serves for creating motion profiles 408, 409 according to which the carriers 60, 70, 80 are to be moved by the driving devices 10, 20, 30, 40, 50. The motion profiles 408, 409 created by the motion profile creating unit 404 can be stored in the storing unit 406, as shown in Fig. 2. In addition, the transmitting unit 405 is arranged to transmit the motion profiles 408, 409 of the motion profile creating unit 404 one after the other to the concerned driving device control device 14, 24, 34, 44, 54 to control the carriers of the first to third carriers 60, 70, 80, which shall be conveyed together in the conveying system 3. Herein, the created motion profile 408 includes a start command. The created motion profile 408 is used, in case a carrier of the carriers 60, 70, 80 is not determined by the determining unit 401 which means that the carrier of the carriers 60, 70, 80 can be moved individually. In the example of Fig. 1, a motion profile for the carrier 80 would be the motion profile 408 comprising a start command. In contrast thereto, the created motion profile 409 does not include a start command. The created motion profile 409 is used, in case a carrier of the carriers 60, 70, 80 is determined by the determining unit 401 which means that the carrier of the carriers 60, 70, 80 is to be moved together with another carrier of the carriers 60, 70, 80. In the example of Fig. 1, a motion profile for the carriers 60, 70 would be the motion profile 409 comprising no start command.

The receiving units 141, 541 in Fig. 2 each can receive the motion profiles 408, 409 according to which the driving devices 10, 50 each have to drive a carrier of the carriers 60, 70, 80. Further, the receiving units 141, 541 each can receive the synchronization signal 407 of the synchronization unit 402.

The analyzing units 142, 542 each analyze, whether or not the motion profile 408, 409 received by the corresponding receiving unit 141, 541 includes a start command.

Dependent on the result of such an analysis, the starting units 143, 543 start a driving of the carrier by the driving units 144, 544. Herein, in case the received motion profile is the motion profile 409 not including a start command, the starting units 143, 543 will wait until the synchronization signal 407 is received by the corresponding receiving units 141, 541. In case the received motion profile is the motion profile 408 including a start command, the starting units 143, 543 will not wait for the synchronization signal 407 to be received but start the driving. When the starting units 143, 543 start the driving of the driving units 144, 544 the carrier arranged over the driving units 144, 544 will move or be conveyed with magnetic force according to the received motion profile 408, 409. Thus, the starting units 143, 543 each start driving of a carrier by the driving unit 144, 544 on the basis of an analyzing result of the corresponding analyzing units 142, 542 and/or a receipt of the synchronization signal 407.

The same is valid for units of the second, third, and fourth driving device control devices 24, 34, 44 which are not shown.

Fig. 3 shows a control method for controlling carriers in a machine, in particular for controlling a conveying system of a machine. In particular, the control method can be performed by the control devices 4, 14, 24, 34, 44, 54.

After a start of the control method, the determining unit 401 determines at least two driving devices of the conveying system 3 which have to convey carriers of the carriers 60, 70, 80 in synchronization with each other. Thereafter, the flow continues with a step S2.

In the step S2, it is checked, whether the determining unit 401 determines driving devices which have to convey carriers of the carriers 60, 70, 80 in synchronization with each other. In case no carriers of the carriers 60, 70, 80 are to be conveyed in synchronization with each other, the flow continues to a step S3. Otherwise the flow continues with a step S4.

In the step S3, all of the carriers 60, 70, 80 or only the carriers to be moved individually are controlled such that they move individually. For this purpose, a motion profile 408 including a start command is created in the motion profile creating unit 404 and sent by the transmitting unit 405 to the concerned driving device control device 14, 24, 34, 44, 54. Consequently, the carriers arranged over the concerned driving devices 10, 20, 40, 30, 50 start moving upon receipt of the motion profile 408. Thereafter, the flow goes back to the step S1.

In the step S4, the synchronization unit 402 produces the synchronization signal 407. Thereafter, the flow continues with a step S5.

In the step S5, the motion profile creating unit 404 creates the motion profile 409 including no start command and with which the carriers determined by the determining unit 401 shall move together. Thereafter, the flow continues with a step S6.

In the step S6, the carrier distance adjusting unit adjusts the distance 15 arranged between two carriers to be conveyed in synchronization with each other. The transmitting unit 405 transmits a signal for adjusting the carrier distance 15 to the concerned driving device control device 14, 24, 34, 44, 54. In the example of Fig. 1, the carrier distance adjusting unit 403 adjusts the distance 15 between the first carrier 60 and the second carrier 70. Thereafter, the flow continues with a step S7.

In the step S7, the transmitting unit 405 transmits the motion profile 409 to the concerned driving device control device 14, 24, 34, 44, 54. In the example of Fig. 1, the transmitting unit 405 will send the signal to the first driving device control unit 14, the second driving device control unit 24, and the third driving device control unit 34. Thereafter, the flow continues with a step S8.

In the step S8, the transmitting unit 405 transmits the synchronization signal 407 to the concerned driving device control devices 14, 24, 34, 44, 54. In the example of Fig. 1, the transmitting unit 405 will send the signal to the first driving device control unit 14, the second driving device control unit 24, and the third driving device control unit 34. Following the, receipt of the signal, the starting units of the concerned driving device control devices 14, 24, 34, 44, 54 will start a control of the concerned driving devices 10, 20, 30, 40, 50 so that the carriers arranged over these driving devices 10, 20, 30, 40, 50 will start moving together. Thereafter the flow goes back to the step S1.

The control method is finished, when the machine 1 and/or the conveying system 3 is switched off.

With the conveying system 3 of the machine 1 a great flexibility in conveying the carriers 60, 70, 80 is created while the process costs of the machine 1 can be minimized.

All of the previously described implementation forms of the conveying apparatus and the conveying method can be used separately or in all possible combinations thereof. In addition, the following modifications are conceivable.

The elements shown in the drawings are shown schematically and can differ in their actual implementation from the forms shown in the drawings whilst their above-described functions are ensured.

The driving devices 10, 20, 30, 40, 50 can each be a coil or a motor capable to produce a magnetic force with which the carriers 60, 70, 80 can be moved or conveyed.

The number of the driving devices 10, 20, 30, 40, 50 forming a track of the conveying system 3 can be selected arbitrarily. In addition, the number of tracks forming the conveying system 3 can be selected arbitrarily.

The number of magnetic sensors 11, 12, 21, 22, 31, 32, 41, 42, 51, 52 assigned to one driving device 10, 20, 30, 40, 50 can be selected arbitrarily.

It is not necessary that the creating of the motion profiles 408, 409 is performed on the basis of a result of the determining unit 401, as it is described in the embodiment. The creating of the motion profiles 408, 409 can also be performed before the step S1. Alternatively, the creating of the motion profiles 408, 409 and the determination by the determining unit 401 can be performed at least partly simultaneously. Further, the sequence of the steps S4 to S6 of the conveying method can be selected arbitrarily. It is also possible to perform all of the steps S4 to S6 or at least two of them at least partly simultaneously. The step S6 in which the carrier distance adjusting unit adjusts the distance 15 is not obligatory. The step S6 can also be omitted in case an adjustment of the distance 15 is not necessary.

The motion profiles 408 and 409 can be different for each carrier 60, 70, 80 in the machine 1. Even when the motion profile 408 is used, so that synchronous starting in combination with the synchronization signal 407 of the carriers 60, 70, 80 is performed, the motion profiles 408 for each carrier 60, 70, 80 can be either the same or different from each other. The distance 15 does not have to be constant. It is even possible that the carriers 60, 70, 80 move in opposite directions. However, in case the carriers 60, 70, 80 are moved in the same direction a constant distance 15 can be advantageous in some applications.

The dimensions shown in the drawings are used for illustrating the principle of the invention and are not limiting. The actual dimensions of the machine 1 and the components thereof can be selected as appropriate.

## Claims

1. Driving device control device (14, 24, 34, 44, 54) for controlling a driving device (10, 20, 30, 40, 50) to drive carriers (60, 70, 80) of a conveying system (3) in a machine (1), comprising a receiving unit (141, 541) for receiving sequentially a motion profile (408, 409) according to which the driving device (10, 20, 30, 40, 50) has to drive a carrier (60, 70, 80) and a synchronization signal (407), wherein the motion profile (408, 409) was created by a motion profile creating unit (404) of a conveying system control device (4) to control the conveying system (3),
an analyzing unit (142, 542) for analyzing, whether or not the motion profile (408, 409) includes a start command, a driving unit (144, 544) for driving the carrier (60, 70, 80) with magnetic force according to the received motion profile (408, 409), and a starting unit (143, 543) for starting driving of the carrier (60, 70, 80) by the driving unit (144, 544) on the basis of an analyzing result of the analyzing unit (142, 542) wherein the starting unit (143, 543) is configured to start driving of the carrier (60, 70, 80) with the driving unit (144, 544) without waiting for the synchronization signal (407), in case the analyzing unit (142, 542) analyzed that the motion profile (408) includes the start command, and to start driving of the carrier (60, 70, 80) with the driving unit (144, 544) after the synchronization signal (407) is received by the receiving unit (141, 541), in case the analyzing unit (142, 542) analyzed that the motion profile (409) does not include the start command.

2. Conveying system control device (4) for controlling a conveying system (3) of a machine (1), comprising a determining unit (401) for determining at least two driving devices (10, 20, 30, 40, 50) of the conveying system (3), which driving devices (10, 20, 30, 40, 50) have to convey carriers (60, 70, 80) in synchronization with each other in the conveying system (3) in which the carriers (60, 70, 80) are conveyable with magnetic force and with variable velocity for each carrier (60, 70, 80), and a motion profile creating unit (404) for creating a motion profile (408, 409) being a profile according to which a driving device (10, 20, 30, 40, 50) has to drive a carrier (60, 70, 80), a transmitting unit (405) for transmitting to the at least two driving devices (10, 20, 30, 40, 50) determined by the determining unit (401) the motion profile (408, 409) and thereafter a synchronization signal (407), wherein the transmitting unit (405) is configured to transmit the motion profile (408, 409) and thereafter the synchronization signal (407) to a receiving unit (141, 541) of a driving device control device (14, 24, 34, 44, 54) to control the corresponding driving device (10, 20, 30, 40, 50) to drive the carriers (60, 70, 80) in the machine (1), wherein the motion profile creating unit (404) is configured to create the motion profile (408, 409) such that the motion profile (408) comprises a start command in case the driving device (10, 20, 30, 40, 50) was not determined by the determining unit (401), and such that the motion profile (409) comprises no start command in case the driving device (10, 20, 30, 40, 50) was determined by the determining unit (401).

3. Conveying system control device (4) according to claim 2, wherein the conveying system control device (4) is arranged to allow other driving devices (10, 20, 30, 40, 50) of the conveying system (3) to convey a carrier (60, 70, 80) unsynchronized with the synchronization signal (407), the other driving devices (10, 20, 30, 40, 50) being not determined by the determining unit (401) to receive the synchronization signal (407).

4. Conveying system control device (4) according to claim 2 or 3 further comprising a carrier distance adjusting unit (403) for adjusting a distance (15) arranged between two carriers (60, 70, 80) to be conveyed in synchronization with each other.

5. Conveying system control device (4) according to claim 4, wherein the carrier distance adjusting unit (403) is arranged to adjust the distance (15) to a constant distance while the carriers (60, 70, 80) are conveyed in synchronization with each other.

6. Conveying system control device (4) according to claim 5, wherein the carriers (60, 70, 80) are provided with at least two magnetic elements (61, 71, 81) arranged spaced to each other with a predetermined magnet pole pitch (72), and wherein the constant distance (15) is equal to n-times the magnet-pole pitch (72) with n being an integer greater than or equal to zero.

7. Conveying system (3) for conveying carriers (60, 70, 80) in a machine (1), comprising at least two carriers (60, 70, 80), at least two driving devices (10, 20, 30, 40, 50) for conveying the carriers (60, 70, 80) with magnetic force and with a velocity variably determinable for each carrier (60, 70, 80) from a first position to a second position different from the first position, at least two driving device control devices (14, 24, 34, 44, 54) according to claim 1, wherein each driving device control device (14, 24, 34, 44, 54) controls one of the driving devices (10, 20, 30, 40, 50), and a conveying system control device (4) according to one of the claims 2 to 6.

8. Control method for controlling a conveying system (3) of a machine (1), comprising the steps of determining (S1), with a determining unit (401) of a conveying system control device (4) for controlling the conveying system (3), at least two driving devices (10, 20, 30, 40, 50) of the conveying system (3), which driving devices (10, 20, 30, 40, 50) have to convey carriers (60, 70, 80) in synchronization with each other in the conveying system (3) in which the carriers (60, 70, 80) are conveyable with magnetic force and with variable velocity for each carrier (60, 70, 80), creating (S3; S5), with a motion profile creating unit (404) of the conveying system control device (4), a motion profile (408, 409) being a profile according to which a driving device (10, 20, 30, 40, 50) has to drive a carrier (60, 70, 80) of the conveying system (3), transmitting (S3; S7), with a transmitting unit (405) of the conveying system control device (4), to the at least two driving devices (10, 20, 30, 40, 50) determined by the determining unit (401) the motion profile (408, 409) and thereafter a synchronization signal (407), wherein the transmitting unit (405) transmits the motion profile (408, 409) and thereafter the synchronization signal (407) to a receiving unit (141, 541) of a driving device control device (14, 24, 34, 44, 54) to control the corresponding driving device (10, 20, 30, 40, 50) to drive the carriers (60, 70, 80) in the machine (1), further comprising the steps of receiving (S3; S8), with a receiving unit (141, 541) of a driving device control device (4), the motion profile (408, 409) according to which the driving device (10, 20, 30, 40, 50) has to drive a carrier (60, 70, 80) and the synchronization signal (407), analyzing (S3; S8), with an analyzing unit (142, 542) of the driving device control device (14, 24, 34, 44, 54), whether or not the motion profile (408, 409) includes a start command, driving (S3; S8), with a driving unit (144, 544) of the driving device control device (14, 24, 34, 44, 54), the carrier (60, 70, 80) with magnetic force according to the received motion profile (408, 409), and starting (S3; S8), with a starting unit (143, 543) of the driving device control device (14, 24, 34, 44, 54), driving of the carrier (60, 70, 80) by the driving unit (144, 544) on the basis of an analyzing result of the analyzing unit (142, 542), wherein the starting unit (143, 543) starts driving of the carrier (60, 70, 80) by the driving unit (144, 544), if the motion profile (408) includes a start command, and waits until the synchronization signal (407) is received by the corresponding receiving unit (141, 541) before starting driving of the carrier (60, 70, 80) by the driving unit (144, 544), if the motion profile (409) does not include a start command.

9. Control method according to claim 8, wherein the steps of determining (S1), creating (S3; S5) and transmitting (S3; S7) are performed in a conveying system control device (4) for controlling the conveying system (3).

10. Control method according to claim 8, wherein the steps of analyzing (S3; S8), driving (S3; S8) and starting (S3; S8) are performed in a driving device control device (4) for controlling a driving device (10, 20, 30, 40, 50) for driving carriers (60, 70, 80) in the conveying system (3).

## Patentansprüche

1. Antriebsvorrichtungs-Steuervorrichtung (14, 24, 34, 44, 54) zum Steuern einer Antriebsvorrichtung (10, 20, 30, 40, 50), um Trägerelemente (60, 70, 80) eines Beförderungssystems (3) in einer Maschine (1) anzutreiben, umfassend eine Empfangseinheit (141, 541), um ein Bewegungsprofil (408, 409) sequenziell zu empfangen, nach dem die Antriebsvorrichtung (10, 20, 30, 40, 50) ein Trägerelement (60, 70, 80) und ein Synchronisierungssignal (407) anzutreiben hat, wobei das Bewegungsprofil (408, 409) von einer Bewegungsprofil-Erstellungseinheit (404) einer Beförderungssystem-Steuervorrichtung (4) erstellt wurde, um das Beförderungssystem (3) zu steuern,
eine Analyseeinheit (142, 542) zum Analysieren, ob das Bewegungsprofil (408, 409) einen Startbefehl enthält oder nicht, eine Antriebseinheit (144, 544) zum Antreiben des Trägerelements (60, 70, 80) mit einer magnetischen Kraft in Übereinstimmung mit dem empfangenen Bewegungsprofil (408, 409), und eine Starteinheit (143, 543) zum Starten des Antreibens des Trägerelements (60, 70, 80) durch die Antriebseinheit (144, 544) auf Basis eines Analyseergebnisses der Analyseeinheit (142, 542),
wobei die Starteinheit (143, 543) ausgelegt ist, ein Antreiben des Trägerelements (60, 70, 80) mit der Antriebseinheit (144, 544) zu starten, ohne auf das Synchronisierungssignal (407) zu warten, falls die Analyseeinheit (142, 542) analysiert hat, dass das Bewegungsprofil (408) den Startbefehl enthält, und das Antreiben des Trägerelements (60, 70, 80) mit der Antriebseinheit (144, 544) zu starten, nachdem das Synchronisierungssignal (407) von der Empfangseinheit (141, 541) empfangen wurde, falls die Analyseeinheit (142, 542) analysiert hat, dass das Bewegungsprofil (409) den Startbefehl nicht enthält.

2. Beförderungssystem-Steuervorrichtung (4) zum Steuern eines Beförderungssystems (3) einer Maschine (1), umfassend eine Ermittlungseinheit (401) zum Ermitteln von mindestens zwei Antriebsvorrichtungen (10, 20, 30, 40, 50) des Beförderungssystems (3), wobei die Antriebsvorrichtungen (10, 20, 30, 40, 50) Trägerelemente (60, 70, 80) miteinander synchronisiert im Beförderungssystem (3) zu befördern haben, in dem die Trägerelemente (60, 70, 80) mit magnetischer Kraft und mit variabler Geschwindigkeit für jedes Trägerelement (60, 70, 80) beförderbar sind, und eine Bewegungsprofil-Erstellungseinheit (404) zum Erstellen eines Bewegungsprofils (408, 409), das ein Profil ist, nach dem eine Antriebsvorrichtung (10, 20, 30, 40, 50) ein Trägerelement (60, 70, 80) anzutreiben hat, eine Sendeeinheit (405) zum Senden des Bewegungsprofils (408, 409) und danach eines Synchronisierungssignals (407) an die mindestens zwei Antriebsvorrichtungen (10, 20, 30, 40, 50), die von der Ermittlungseinheit (401) ermittelt wurden, wobei die Sendeeinheit (405) konfiguriert ist, das Bewegungsprofil (408, 409) und danach das Synchronisierungssignal (407) an eine Empfangseinheit (141, 541) einer Antriebsvorrichtungs-Steuervorrichtung (14, 24, 34, 44, 54) zu senden, um die entsprechende Antriebsvorrichtung (10, 20, 30, 40, 50) zu steuern, um die Trägerelemente (60, 70, 80) in der Maschine (1) anzutreiben,
wobei die Bewegungsprofil-Erstellungseinheit (404) ausgelegt ist, das Bewegungsprofil (408, 409) so zu erstellen, dass das Bewegungsprofil (408) einen Startbefehl umfasst, falls die Antriebsvorrichtung (10, 20, 30, 40, 50) nicht durch die Ermittlungseinheit (401) ermittelt wurde, und sodass das Bewegungsprofil (409) keinen Startbefehl umfasst, falls die Antriebsvorrichtung (10, 20, 30, 40, 50) von der Ermittlungseinheit (401) ermittelt wurde.

3. Beförderungssystem-Steuervorrichtung (4) nach Anspruch 2, wobei die Beförderungssystem-Steuervorrichtung (4) ausgelegt ist, anderen Antriebsvorrichtungen (10, 20, 30, 40, 50) des Beförderungssystems (3) zu erlauben, ein Trägerelement (60, 70, 80) nicht mit dem Synchronisierungssignal (407) synchronisiert zu befördern, wobei die anderen Antriebsvorrichtungen (10, 20, 30, 40, 50) nicht von der Ermittlungseinheit (401) ermittelt wurden, um das Synchronisierungssignal (407) zu empfangen.

4. Beförderungssystem-Steuervorrichtung (4) nach Anspruch 2 oder 3, die ferner eine Trägerelementabstand-Anpassungseinheit (403) umfasst, um einen Abstand (15) anzupassen, der sich zwischen zwei Trägerelementen (60, 70, 80) befindet, die miteinander synchronisiert zu befördern sind.

5. Beförderungssystem-Steuervorrichtung (4) nach Anspruch 4, wobei die Trägerelementabstand-Anpassungseinheit (403) angelegt ist, den Abstand (15) auf einen konstanten Abstand anzupassen, während die Trägerelemente (60, 70, 80) miteinander synchronisiert befördert werden.

6. Beförderungssystem-Steuervorrichtung (4) nach Anspruch 5, wobei die Trägerelemente (60, 70, 80) mit mindestens zwei Magnetelementen (61, 71, 81) versehen sind, die in einem Abstand zueinander mit einer vorbestimmten Magnetpolteilung (72) angeordnet sind, und wobei der konstante Abstand (15) gleich einem n-Fachen der Magnetpolteilung (72) ist, wobei n eine ganze Zahl ist, die größer als oder gleich null ist.

7. Beförderungssystem (3) zum Befördern von Trägerelementen (60, 70, 80) in einer Maschine (1), das mindestens zwei Trägerelemente (60, 70, 80), mindestens zwei Antriebsvorrichtungen (10, 20, 30, 40, 50) zum Befördern der Trägerelemente (60, 70, 80) mit magnetischer Kraft und mit einer für jedes Trägerelement (60, 70, 80) variabel bestimmbaren Geschwindigkeit von einer ersten Position an eine zweite, von der ersten Position verschiedene Position, mindestens zwei Antriebsvorrichtungs-Steuervorrichtungen (14, 24, 34, 44, 54) nach Anspruch 1 umfasst, wobei jede Antriebsvorrichtungs-Steuervorrichtung (14, 24, 34, 44, 54) eine der Antriebsvorrichtungen (10, 20, 30, 40, 50) steuert, und eine Beförderungssystem-Steuervorrichtung (4) nach einem der Ansprüche 2 bis 6.

8. Steuerverfahren zum Steuern eines Beförderungssystems (3) einer Maschine (1), umfassend die Schritte zum Ermitteln (S1), mit einer Ermittlungseinheit (401) einer Beförderungssystem-Steuervorrichtung (4) zum Steuern des Beförderungssystems (3), von mindestens zwei Antriebsvorrichtungen (10, 20, 30, 40, 50) des Beförderungssystems (3), wobei die Antriebsvorrichtungen (10, 20, 30, 40, 50) Trägerelemente (60, 70, 80) miteinander synchronisiert im Beförderungssystem (3) zu befördern haben, in dem die Trägerelemente (60, 70, 80) mit magnetischer Kraft und mit variabler Geschwindigkeit für jedes Trägerelement (60, 70, 80) beförderbar sind, Erstellen (S3; S5), mit einer Bewegungsprofil-Erstellungseinheit (404) der Beförderungssystem-Steuervorrichtung (4), eines Bewegungsprofils (408, 409), das ein Profil ist, nach dem eine Antriebsvorrichtung (10, 20, 30, 40, 50) ein Trägerelement (60, 70, 80) des Beförderungssystems (3) anzutreiben hat, Senden (S3; S7), mit einer Sendeeinheit (405) der Beförderungssystem-Steuervorrichtung (4), des Bewegungsprofils (408, 409) und danach eines Synchronisierungssignals (407) an die mindestens zwei Antriebsvorrichtungen (10, 20, 30, 40, 50), die von der Ermittlungseinheit (401) ermittelt wurden, wobei die Sendeeinheit (405) das Bewegungsprofil (408, 409) und danach das Synchronisierungssignal (407) an eine Empfangseinheit (141, 541) einer Antriebsvorrichtungs-Steuervorrichtung (14, 24, 34, 44, 54) sendet, um die entsprechende Antriebsvorrichtung (10, 20, 30, 40, 50) zu steuern, um die Trägerelemente (60, 70, 80) in der Maschine (1) anzutreiben,
ferner umfassend die Schritte zum Empfangen (S3; S8) des Bewegungsprofils (408, 409), nach dem die Antriebsvorrichtung (10, 20, 30, 40, 50) ein Trägerelement (60, 70, 80) anzutreiben hat, und des Synchronisierungssignals (407) mit einer Empfangseinheit (141, 541) einer Antriebsvorrichtungs-Steuervorrichtung (4), Analysieren (S3; S8), mit einer Analyseeinheit (142, 542) der Antriebsvorrichtungs-Steuervorrichtung (14, 24, 34, 44, 54), ob das Bewegungsprofil (408, 409) einen Startbefehl enthält oder nicht, Antreiben (S3; S8), mit einer Antriebseinheit (144, 544) der Antriebsvorrichtungs-Steuervorrichtung (14, 24, 34, 44, 54), des Trägerelements (60, 70, 80) mit einer magnetischen Kraft in Übereinstimmung mit dem empfangenen Bewegungsprofil (408, 409), und Starten (S3; S8), mit einer Starteinheit (143, 543) der Antriebsvorrichtungs-Steuervorrichtung (14, 24, 34, 44, 54), des Antreibens des Trägerelements (60, 70, 80) durch die Antriebseinheit (144, 544) auf Basis eines Analyseergebnisses der Analyseeinheit (142, 542),
wobei die Starteinheit (143, 543) das Antreiben des Trägerelements (60, 70, 80) durch die Antriebseinheit (144, 544) startet, falls das Bewegungsprofil (408) einen Startbefehl enthält, und wartet, bis das Synchronisierungssignal (407) von der entsprechenden Empfangseinheit (141, 541) empfangen wurde, bevor sie das Antreiben des Trägerelements (60, 70, 80) durch die Antriebseinheit (144, 544) startet, falls das Bewegungsprofil (409) keinen Startbefehl enthält.

9. Steuerverfahren nach Anspruch 8, wobei die Schritte zum Ermitteln (S1), Erstellen (S3; S5) und Senden (S3; S7) in einer Beförderungssystem-Steuervorrichtung (4) zum Steuern des Beförderungssystems (3) durchgeführt werden.

10. Steuerverfahren nach Anspruch 8, wobei die Schritte zum Analysieren (S3; S8), Antreiben (S3; S8) und Starten (S3; S8) in einer Antriebsvorrichtung-Steuervorrichtung (4) zum Steuern einer Antriebsvorrichtung (10, 20, 30, 40, 50) zum Antreiben von Trägerelementen (60, 70, 80) im Beförderungssystem (3) durchgeführt werden.

## Revendications

1. Dispositif de commande de dispositif d'entraînement (14, 24, 34, 44, 54) permettant de commander un dispositif d'entraînement (10, 20, 30, 40, 50) afin d'entraîner des éléments porteurs (60, 70, 80) d'un système de transport (3) dans une machine (1), comprenant une unité de réception (141, 541) permettant de recevoir successivement un profil de déplacement (408, 409) selon lequel le dispositif d'entraînement (10, 20, 30, 40, 50) doit entraîner un élément porteur (60, 70, 80), et un signal de synchronisation (407), le profil de déplacement (408, 409) ayant été créé par une unité de création de profil de déplacement (404) d'un dispositif de commande de système de transport (4) pour commander le système de transport (3) ; une unité d'analyse (142, 542) permettant d'analyser si le profil de déplacement (408, 409) inclut ou non une commande de démarrage ; une unité d'entraînement (144, 544) permettant d'entraîner l'élément porteur (60, 70, 80) avec une force magnétique selon le profil de déplacement reçu (408, 409) ; et une unité de démarrage (143, 543) permettant de démarrer l'entraînement de l'élément porteur (60, 70, 80) par l'unité d'entraînement (144, 544) sur la base d'un résultat d'analyse de l'unité d'analyse (142, 542),
l'unité de démarrage (143, 543) étant conçue pour :
démarrer l'entraînement de l'élément porteur (60, 70, 80) avec l'unité d'entraînement (144, 544) sans attendre le signal de synchronisation (407), si l'unité d'analyse (142, 542) a analysé que le profil de déplacement (408) inclut la commande de démarrage, et
démarrer l'entraînement de l'élément porteur (60, 70, 80) avec l'unité d'entraînement (144, 544) après la réception du signal de synchronisation (407) par l'unité de réception (141, 541), si l'unité d'analyse (142, 542) a analysé que le profil de déplacement (409) n'inclut pas la commande de démarrage.

2. Dispositif de commande de système de transport (4) permettant de commander un système (3) d'une machine (1), comprenant une unité de détermination (401) permettant de déterminer au moins deux dispositifs d'entraînement (10, 20, 30, 40, 50) du système de transport (3), lesdits dispositifs d'entraînement (10, 20, 30, 40, 50) devant transporter des éléments porteurs (60, 70, 80) en synchronisation les uns par rapport aux autres dans le système de transport (3) où les éléments porteurs (60, 70, 80) peuvent être transportés avec une force magnétique et avec une vitesse variable pour chaque élément porteur (60, 70, 80) ; et une unité de création de profil de déplacement (404) permettant de créer un profil de déplacement (408, 409) étant un profil selon lequel un dispositif d'entraînement (10, 20, 30, 40, 50) doit entraîner un élément porteur (60, 70, 80) ; une unité de transmission (405) permettant de transmettre aux au moins deux dispositifs d'entraînement (10, 20, 30, 40, 50) déterminés par l'unité de détermination (401) le profil de déplacement (408, 409) puis un signal de synchronisation (407), l'unité de transmission (405) étant conçue pour transmettre le profil de déplacement (408, 409) puis le signal de synchronisation (407) à une unité de réception (141, 541) d'un dispositif de commande de dispositif d'entraînement (14, 24, 34, 44, 54) pour commander le dispositif d'entraînement (10, 20, 30, 40, 50) correspondant afin d'entraîner les éléments porteurs (60, 70, 80) dans la machine (1),
l'unité de création de profil de déplacement (404) étant conçue pour créer le profil de déplacement (408, 409) de sorte que le profil de déplacement (408) inclue une commande de démarrage si le dispositif d'entraînement (10, 20, 30, 40, 50) n'a pas été déterminé par l'unité de détermination (401), et de sorte que le profil de déplacement (409) n'inclue pas de commande de démarrage si le dispositif d'entraînement (10, 20, 30, 40, 50) a été déterminé par l'unité de détermination (401).

3. Dispositif de commande de système de transport (4) selon la revendication 2,
dans lequel le dispositif de commande de système de transport (4) est conçu pour permettre à d'autres dispositifs d'entraînement (10, 20, 30, 40, 50) du système de transport (3) de transporter un élément porteur (60, 70, 80) non synchronisé avec le signal de synchronisation (407), les autres dispositifs d'entraînement (10, 20, 30, 40, 50) n'étant pas déterminés par l'unité de détermination (401) pour recevoir le signal de synchronisation (407).

4. Dispositif de commande de système de transport (4) selon la revendication 2 ou 3, comprenant en outre une unité de réglage de distance entre éléments porteurs (403) permettant de régler une distance (15) prévue entre deux éléments porteurs (60, 70, 80) devant être transportés en synchronisation l'un par rapport à l'autre.

5. Dispositif de commande de système de transport (4) selon la revendication 4,
l'unité de réglage de distance entre éléments porteurs (403) étant conçue pour régler la distance (15) à une distance constante pendant que les éléments porteurs (60, 70, 80) sont transportés en synchronisation les uns par rapport aux autres.

6. Dispositif de commande de système de transport (4) selon la revendication 5,
les éléments porteurs (60, 70, 80) étant munis d'au moins deux éléments magnétiques (61, 71, 81) disposés espacés l'un par rapport à l'autre avec un pas de pôle d'aimant (72), et la distance constante (15) étant égale à n fois le pas de pôle d'aimant (72), n étant un entier supérieur ou égal zéro.

7. Système de transport (3) permettant de transporter des éléments porteurs (60, 70, 80) dans une machine (1), comprenant au moins deux éléments porteurs (60, 70, 80), au moins deux dispositifs d'entraînement (10, 20, 30, 40, 50) permettant de transporter les éléments porteurs (60, 70, 80) avec une force magnétique et avec une vitesse pouvant être déterminée de manière variable pour chaque élément porteur (60, 70, 80) d'une première position à une seconde position différente de la première position, et au moins deux dispositifs de commande de dispositif d'entraînement (14, 24, 34, 44, 54) selon la revendication 1,
chaque dispositif de commande de dispositif d'entraînement (14, 24, 34, 44, 54) commandant un des dispositifs d'entraînement (10, 20, 30, 40, 50) et un dispositif de commande de système de transport (4) selon l'une des revendications 2 à 6.

8. Procédé de commande permettant de commander un système de transport (3) d'une machine (1), comprenant les étapes consistant à déterminer (S1), avec une unité de détermination (401) d'un dispositif de commande de système de transport (4) permettant de commander le système de transport (3), au moins deux dispositifs d'entraînement (10, 20, 30, 40, 50) du système de transport (3), lesdits dispositifs d'entraînement (10, 20, 30, 40, 50) devant transporter des éléments porteurs (60, 70, 80) en synchronisation les uns par rapport aux autres dans le système de transport (3) où les éléments porteurs (60, 70, 80) peuvent être transportés avec une force magnétique et avec une vitesse variable pour chaque élément porteur (60, 70, 80) ; créer (S3 ; S5), avec une unité de création de profil de déplacement (404) du dispositif de commande de système de transport (4), un profil de déplacement (408, 409) étant un profil selon lequel un dispositif d'entraînement (10, 20, 30, 40, 50) doit entraîner un élément porteur (60, 70, 80) du système de transport (3) ; transmettre (S3 ; S7), avec une unité de transmission (405) du dispositif de commande de système de transport (4), aux au moins deux dispositifs d'entraînement (10, 20, 30, 40, 50) déterminés par l'unité de détermination (401) le profil de déplacement (408, 409) puis un signal de synchronisation (407),
l'unité de transmission (405) étant conçue pour transmettre le profil de déplacement (408, 409) puis le signal de synchronisation (407) à une unité de réception (141, 541) d'un dispositif de commande de dispositif d'entraînement (14, 24, 34, 44, 54) pour commander le dispositif d'entraînement (10, 20, 30, 40, 50) correspondant afin d'entraîner les éléments porteurs (60, 70, 80) dans la machine (1),
le procédé comprenant en outre les étapes consistant à recevoir (S3 ; S8), avec une unité de réception (141, 541) d'un dispositif de commande de dispositif d'entraînement (4), le profil de déplacement (408, 409) selon lequel le dispositif d'entraînement (10, 20, 30, 40, 50) doit entraîner un élément porteur (60, 70, 80) et le signal de synchronisation (407) ; analyser (S3 ; S8), avec une unité d'analyse (142, 542) du dispositif de commande de dispositif d'entraînement (14, 24, 34, 44, 54), si le profil de déplacement (408, 409) inclut ou non une commande de démarrage ; entraîner (S3 ; S8), avec une unité d'entraînement (144, 544) du dispositif de commande de dispositif d'entraînement (14, 24, 34, 44, 54), l'élément porteur (60, 70, 80) avec une force magnétique selon le profil de déplacement reçu (408, 409) ; et démarrer (S3 ; S8), avec une unité de démarrage (143, 543) du dispositif de commande de dispositif d'entraînement (14, 24, 34, 44, 54), l'entraînement de l'élément porteur (60, 70, 80) par l'unité d'entraînement (144, 544) sur la base d'un résultat d'analyse de l'unité d'analyse (142, 542),
l'unité de démarrage (143, 543) démarrant l'entraînement de l'élément porteur (60, 70, 80) par l'unité d'entraînement (144, 544) si le profil de déplacement (408) inclut une commande de démarrage, et attendant jusqu'à la réception du signal de synchronisation (407) par l'unité de réception (141, 541) correspondant avant de démarrer l'entraînement de l'élément porteur (60, 70, 80) par l'unité d'entraînement (144, 544) si le profil de déplacement (409) n'inclut pas de commande de démarrage.

9. Procédé de commande selon la revendication 8,
dans lequel les étapes de détermination (S1), de création (S3 ; S5) et de transmission (S3 ; S7) sont réalisées dans un dispositif de commande de système de transport (4) permettant de commander le système de transport (3).

10. Procédé de commande selon la revendication 8,
dans lequel les étapes d'analyse (S3 ; S8), d'entraînement (S3 ; S8) et de démarrage (S3 ; S8) sont réalisées dans un dispositif de commande de dispositif d'entraînement (4) permettant de commander un dispositif d'entraînement (10, 20, 30, 40, 50) pour entraîner des éléments porteurs (60, 70, 80) dans le système de transport (3).
